# EUROPEAN PATENT APPLICATION

(11) **EP 1 048 488 A2**
(43) Date of publication of application: **02.11.2000**
(21) Application number: 00303409.7
(22) Date of filing: 20.04.2000
(51) Int. Cl.: B60C 11/11, B60C 11/13

(54) **Vehicle tyre**

(30) Priority: 26.04.1999 JP 11858899
(71) Applicant: SUMITOMO RUBBER INDUSTRIES LIMITED, Kobe-shi, Hyogo-ken (JP)
(72) Inventor: Suzuki, Kazuya, Shirakawa-shi, Fukushima-ken (JP)
(74) Representative: Stewart, Charles Geoffrey

(57) **Abstract**

A vehicle tyre comprises a tread portion provided with a plurality of blocks (5) circumferentially separated from each other by lateral grooves (4), the blocks (5) each having a pair of lateral walls (6) each facing one of the lateral grooves (4), and at least one of a pair of lateral walls (6) is provided with an uneven surface so as to form an uneven ridge between the lateral wall (6) and a ground-contacting top surface of the block. Preferably, the roughness of the uneven surface is in the range of from 0.5 to 3 mm.

## Description

The present invention relates to a vehicle tyre, more particularly to an improvement in tread elements capable of reducing tyre noise during running.

In recent years, there is a strong demand for low noise tyres, especially for passenger cars.

The noise generated from a tyre during running includes a pattern noise originating from the tread pattern. In general, a tread pattern comprises lateral grooves circumferentially dividing tread blocks. During running, the blocks' edges strike the road surface and generate so called impact sound. On the other hand, when a circumferential groove is provided, there is a possibility that the air enclosed by the circumferential groove and the road surface is resonant, and the resonance sound is emitted outside through lateral grooves.

It is therefore, an object of the present invention to provide a vehicle tyre the pattern noise of which is effectively reduced to improve the tyre noise during running.

According to the present invention, a vehicle tyre comprises a tread portion provided with a plurality of blocks which are circumferentially separated from each other by lateral grooves, each of the blocks having a pair of lateral walls each facing one of the lateral grooves, and at least one of a pair of the lateral walls is provided with an uneven surface so as to form an uneven ridge between the lateral wall and a ground-contacting top surface of the block.

Preferably, the roughness of the uneven surface is in the range of from 0.5 to 3 mm.

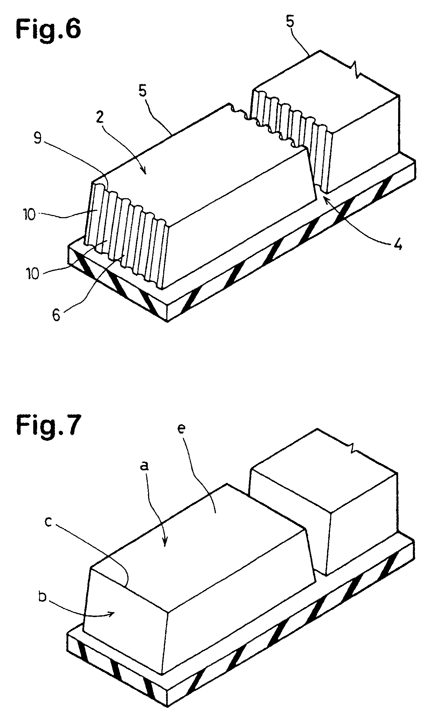

As shown in Fig.7, if a ridge (c) between a lateral wall (b) and the ground contacting top surface (a) of a block (e) is a straight or gentle curve, the ridges (c) beat the road surface during running and a high-level impact sound is produced.

In the present invention, however, as the ridge is uneven, the impact is temporally dispersed and becomes small and the impact sound is effectively reduced. Further, the uneven surface disturbs the motion of the air in the lateral groove transmitting noise from circumferential grooves such as resonance noise and the like. Thus, pattern noise originating from the tread pattern can be effectively reduced.

An embodiment of the present invention will now be described in detail in conjunction with the accompanying drawings:
Fig.1 shows a simplified tread pattern employed in a pneumatic tyre according to the present invention;
Fig.2 is a view showing a dimple or a groove;
Fig.3 is a perspective view of a block showing an example of the uneven surface formed by dimples;
Fig.4 is an enlarged perspective view showing the uneven ridge formed by the dimples;
Fig.5 is a cross sectional view of a lateral groove showing another example of the uneven surface formed by protuberances;
Fig.6 is a perspective view of a block showing another example of the uneven surface formed by radially extending grooves; and
Fig.7 is a perspective view of a block having an even surface used in a comparative test tyre.

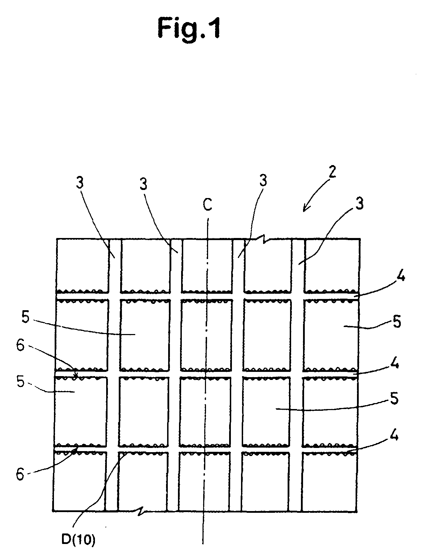

In this embodiment, the vehicle tyre according to the present invention is a pneumatic tyre, which comprises a tread portion 2, a pair of axially spaced bead portions and a pair of sidewall portions extending between the tread edges and the bead portions to have a toroidal shape. The tread portion 2 is formed by a tread rubber disposed radially outside a carcass and has a ground contacting region. In the ground contacting region, lateral grooves 4 are disposed. In Fig.1 showing an example of the tread pattern, circumferential grooves 3 are also disposed. The circumferential grooves 3 in this example are four circumferentially continuous straight grooves 3, and the lateral grooves 4 in this example are also straight grooves substantially parallel to the tyre axial direction.

Therefore, the tread portion is divided into blocks 5 in a plurality of circumferential rows. In the present invention, however, it is also possible to provide a rib. Each of the blocks 5 has a pair of lateral walls 6 each facing one of the lateral grooves 4.

According to the present invention, at least one of the lateral walls 6 of each block 5 is provided with an uneven surface. In the case of a bi-directional tread pattern, the uneven surface is provided on both the toe side and heel side of the block. However, in case the of a unidirectional tread pattern, it is possible to provide the uneven surface on only one side, usually the heel side of the block. The blocks here are circumferentially separated tread elements, and the above-mentioned rib is a circumferentially continuous tread element. The lateral wall 6 or a portion of the lateral wall 6 provided with an uneven surface has an inclination angle of less than 30 degrees with respect to the tyre axial direction.

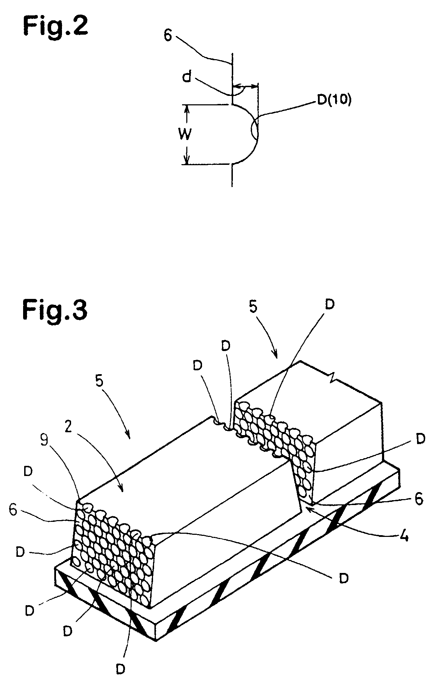

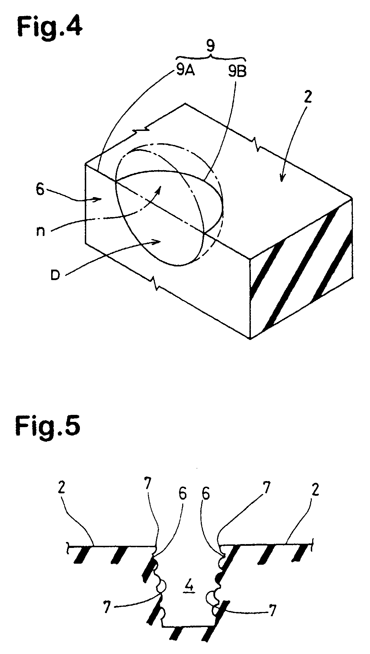

The uneven surface is formed by concave or convex formations such as dimples D (Fig.3), protuberances 7 (Fig.5), radially extending grooves 10 (Fig.6) or the like.

Preferably, the roughness thereof is set in the range of from 0.5 to 3 mm. If the roughness is more than 3 mm, the steering stability is liable to decrease. If the roughness is less than 0.5 mm, the noise reducing effect decreases.

The uneven surface is provided in order to form an uneven ridge between the lateral wall 6 and a ground contacting top surface of the block 5. Thus the uneven surface extends from the ground contacting top face to at least the tread wear limit line or the radially inner end of the lateral wall 6.

In the drawings, as the inclination angle of the lateral walls 6 is substantially zero with respect to the tyre axial direction, the lateral walls 6 are provided with the uneven surface throughout.

In Fig.3, the lateral walls 6 are provided with dimples D to make the surface uneven. When viewed in a direction normal to the lateral wall 6, the dimples D are round, and the diameter W is in the range of not more than 8 mm, preferably 2 to 8 mm. The depth (d) is preferably in the range of from 0.5 to 3 mm.

The dimples D may be arranged regularly or irregularly, but they are arranged compactly so that the dimples overlap in the radial direction and axial direction but do not come in contact with each other just like a golf ball or honeycomb. In this example, the shape of the dimples is a hemisphere except for those at the ridge of which a radially outer half (n) is cut off as shown in Fig.4. Thus, each of the lateral wall and ground contacting top surface has an edge line 9 made up of straight segments 9A and arc segments 9B. By arranging the dimpled like a honeycomb, the decrease in the rigidity can be limited in the vicinity of the ridge, and the decrease in the rigidity of the block as a whole becomes minimum. As a result, deterioration in the steering stability and the like is minimised.

In Fig.5, the lateral wall 6 is provided with protuberances 7 instead of dimples D. In this example, the shape of the protuberances 7 is a hemisphere except for those at the ridge of which a radially outer half is cut off. When viewed in a direction normal to the lateral wall 6, the diameter is in the range of not more than 8 mm, preferably 2 to 8 mm. The maximum projection is in the range of from 0.5 to 3 mm. The protuberances 7 may be arranged regularly or irregularly, but they are arranged compactly so that the protuberances overlap in the radial direction and axial direction but do not come in contact with each other.

In Fig.6, the uneven surface is formed by small grooves 10 extending continuously from the ground contacting top surface to the bottom of the lateral groove. As shown in Fig.2, the groove depth (d) is in the range of from 0.5 to 3 mm, and the groove width W is preferably set in the range of not more than 8 mm, preferably 2 to 8 mm. The spacings between the grooves is preferably set in the range of from 2 to 8 mm. In this example, the cross sectional shape in a plane parallel to the ground contacting surface is a semicircle.

In the cases of dimples or protuberances, polygons such as triangle, rectangle, pentagon, hexagon and the like can be used aside from a circle as the shape when viewed in a direction normal to the lateral wall. In the case of grooves, as the cross sectional shape in a plane parallel to the ground contacting surface, a rectangle, V-shape, U-shape and the like can be used aside from a semicircle. On the other hand, as the lateral grooves 4 and/or circumferential grooves 3, a wavy or zigzag groove can be used aside from a straight groove.

### Comparison Tests:

Test tyres having the same internal structure and simplified tread pattern shown in Fig.1 were made and tested for noise performance and dry steering stability.

### Noise performance Test:

A Japanese 2000cc FR passenger car provided on the four wheels with test tyres was run on a dry asphalt road surface of a straight test course, and noise was measured near the driver's left ear and at an ear position in the centre of the rear seat to obtain the average thereof.

### Dry steering stability test:

The test car was run on a dry asphalt tyre test course, and the test driver evaluated overall performance into ten ranks based on the straight running stability, cornering performance, braking performance and the like. The larger the number, the better the performance.

The test results are shown in the following Table 1.

**Table 1**

| Tyre | | Ex. | Ref. |
|---|---|---|---|
| Circumferential grooves | | | |
| Width (mm) | | 10 | 10 |
| Depth (mm) | | 8.3 | 8.3 |

| Lateral grooves | | | |
|---|---|---|---|
| Width (mm) | | 8 | 8 |
| Depth (mm) | | 6 | 6 |
| Uneven surface | | Fig.2 | Fig.7 |

| Dimples | | | |
|---|---|---|---|
| Number per lateral wall | | 24 | 0 |
| Depth d (mm) | | 0.5 | - |
| Max. diameter (mm) | | 2 | - |

| Pattern noise (dB) | | | |
|---|---|---|---|
| Speed | 40 km/h | 67.5 | 71.5 |
| | 60 km/h | 74.1 | 76.1 |
| | 80 km/h | 77.4 | 80 |
| | 100 km/h | 79.8 | 82.9 |
| Dry steering stability | | 5 | 5 |
| Tyre size: 205/60R15 Rim size: 6JX15 Pressure: 2.2 kgf/cm² | | | |

As described above, in the vehicle tyre according to the present invention, the lateral walls of the blocks facing the lateral grooves are provided with the uneven surface to make the ridge uneven. Thus, the impact of the ridge against the road surface is mitigated, and the impact sound is reduced to improve the running tyre noise.

## Claims

1. A vehicle tyre comprising a tread portion (2) provided with a plurality of blocks (5) circumferentially separated from each other by lateral grooves (4), the blocks (5) each having a pair of lateral walls (6) each facing one of the lateral grooves (4), characterised in that at least one of said pair of lateral walls (6) is provided with an uneven surface so as to form an uneven ridge between the lateral wall (6) and a ground-contacting top surface of the block (5).

2. A vehicle tyre according to claim 1, characterised in that the uneven surface is formed by dimples or protuberances (D,7).

3. A vehicle tyre according to claim 2, characterised in that said dimples (D) or protuberances (7) are arranged in a pattern like that of a honeycomb.

4. A vehicle tyre according to claim 2 or 3, characterised in that said dimples (D) or protuberances (7) are a circle when viewed in a direction normal to the lateral wall.

5. A vehicle tyre according to claim 2 or 3, characterised in that said dimples (D) or protuberances (7) are substantially hemispherical.

6. A vehicle tyre according to claim 2 or 3, characterised in that said dimples (D) or protuberances (7) are a polygon when viewed in a direction normal to the lateral wall.

7. A vehicle tyre according to claim 1, characterised in that the uneven surface is formed by radially extending grooves (10).

8. A vehicle tyre according to claim 2, 3, 4, 5 or 6 , characterised in that said dimples (D) or protuberances (7) have a maximum diameter of not more than 8 mm.

9. A vehicle tyre according to claim 7, characterised in that said radially extending grooves (10) have a width of not more than 8 mm.

10. A vehicle tyre according to any of claims 1 to 9, characterised in that the roughness of the uneven surface is in the range of from 0.5 to 3 mm.
